# DEMANDE DE BREVET EUROPEEN

(11) **EP 2 960 482 A2**
(43) Date de publication de la demande: **30.12.2015**
(21) Numéro de dépôt: 15173131.2
(22) Date de dépôt: 22.06.2015
(51) Int. Cl.: F02M 25/07

(54) **SYSTÈME DE RECIRCULATION DE GAZ D'ÉCHAPPEMENT**

(30) Priorité: 25.06.2014 FR 1455880
(71) Demandeur: VALEO SYSTEMES THERMIQUES, 78320 Le Mesnil Saint-Denis (FR)
(72) Inventeur: BLANCHARD, Jérôme, 28700 BLEURY (FR); FERLAY, Benjamin, 78720 CERNAY LA VILLE (FR); GUERRA, Julio, 91760 ITTEVILLE (FR)
(74) Mandataire: Metz, Gaëlle

(57) **Abrégé**

La présente invention concerne un système de recirculation de gaz d'échappement (1) comportant :
- un dispositif d'admission d'air (3) d'un moteur thermique comprenant des conduits d'admission (30) amenant de l'air aux cylindres de combustion (5), chaque cylindre de combustion (5) comportant un conduit d'admission (30) propre, lesdits conduits d'admission (30) comportant un orifice d'arrivée (32) de gaz d'échappement, et
- un circuit de recirculation (7) des gaz d'échappement comprenant un rail d'injection (70) comportant des orifices de sortie (72) des gaz d'échappement connectés aux orifices d'arrivée (32) des conduits d'admission (30),

la connexion entre les orifices d'arrivée (32) et les orifices de sortie (72) étant réalisée par un élément de couplage conique (9), ledit élément de couplage conique (9) comportant :
- un tube de connexion (90) connecté à l'orifice de sortie (72) du rail d'injection (70) et plongeant au sein de l'orifice d'arrivée (32) de sorte à guider les gaz d'échappement issus du rail d'injection (70) au sein du conduit d'admission (30), ledit tube de connexion (90) ayant un diamètre inférieur au diamètre de l'orifice d'arrivé (32),
- un connecteur conique (92) comportant un sommet (94) fixé au tube de connexion (90) et une base (96) fixée à la périphérie de l'orifice d'arrivée (32).

## Description

L'invention se rapporte au domaine des véhicules automobiles et plus particulièrement aux systèmes de recirculation de gaz d'échappement.

Afin de réduire les émissions polluantes, notamment en oxydes d'azote, il est connu de réinjecter une partie des gaz d'échappement dans l'arrivée d'air d'admission au moyen d'un système de recirculation des gaz d'échappement. L'injection de ces gaz d'échappement recirculés dans l'air d'admission peut être réalisée au moyen d'un rail d'injection, perpendiculaire au flux d'air d'admission, muni d'orifices permettant l'arrivée de gaz d'échappement recirculés au niveau de chaque cylindre de combustion. La quantité de gaz d'échappement recirculés arrivant dans l'air d'admission des cylindres de combustion est contrôlée par une vanne spécifique dite vanne EGR placée en amont du rail d'injection. Il est en effet nécessaire de contrôler précisément la quantité de gaz d'échappement recirculés arrivant dans chaque cylindre de combustion afin de respecter l'équilibre entre les émissions d'oxydes d'azotes et de particules issues de cette recirculation.

Cependant les gaz d'échappement arrivant au niveau du rail d'injection et dans l'arrivée d'air d'admission ont une température élevée ce qui oblige ces éléments à être en matériau couteux résistant aux hautes températures.

Un des buts de la présente invention est donc de remédier aux inconvénients de l'art antérieur et de proposer un système de recirculation de gaz d'échappement peu couteux.

La présente invention concerne donc un système de recirculation de gaz d'échappement comportant :
- un dispositif d'admission d'air d'un moteur thermique comprenant des conduits d'admission amenant de l'air aux cylindres de combustion, chaque cylindre de combustion comportant un conduit d'admission propre, lesdits conduits d'admission comportant un orifice d'arrivée de gaz d'échappement, et
- un circuit de recirculation des gaz d'échappement comprenant un rail d'injection comportant des orifices de sortie des gaz d'échappement connectés aux orifices d'arrivée des conduits d'admission,
la connexion entre les orifices d'arrivée et les orifices de sortie étant réalisée par un élément de couplage conique, ledit élément de couplage conique comportant :
- un tube de connexion connecté à l'orifice de sortie du rail d'injection et plongeant au sein de l'orifice d'arrivée de sorte à guider les gaz d'échappement issus du rail d'injection au sein du conduit d'admission, ledit tube de connexion ayant un diamètre inférieur au diamètre de l'orifice d'arrivé,
- un connecteur conique comportant un sommet fixé au tube de connexion et une base fixée à la périphérie de l'orifice d'arrivée.

La présence de cet élément de couplage conique permet l'obtention d'un découplage thermique entre d'une part, le rail d'injection et l'élément de couplage conique qui sont traversés et chauffé par les gaz d'échappement pouvant atteindre une température de l'ordre de 450°C, et d'autre part l'interface entre l'élément de couplage conique et la périphérie de l'orifice d'arrivée. Ainsi la température à qui peut atteindre l'interface entre l'élément de couplage conique et la périphérie de l'orifice d'arrivée peut être de l'ordre de 175 °C ou inférieure ce qui autorise la fabrication des conduits d'admission et plus généralement du dispositif d'admission d'air en un matériau moins résistant à la chaleur donc moins couteux à produire.

Selon un aspect de l'invention, entre la base du connecteur conique et la périphérie de l'orifice d'arrivée est placé un joint d'étanchéité.

Selon un autre aspect de l'invention, le sommet du connecteur conique est dirigé vers l'intérieur du conduit d'admission.

Selon un autre aspect de l'invention, le sommet du connecteur conique est dirigé vers l'extérieur du conduit d'admission.

Selon un autre aspect de l'invention, la fixation entre la base du connecteur conique et le dispositif d'admission d'air est réalisée au moyen d'au moins une vis de fixation.

Selon un autre aspect de l'invention, le rail d'injection et l'élément de couplage conique sont métalliques.

Selon un autre aspect de l'invention, le dispositif d'admission d'air est en matière plastique.

Selon un autre aspect de l'invention, le moteur thermique est un moteur suralimenté et le dispositif d'admission d'air comporte un refroidisseur d'air de suralimentation placé en amont de la connexion dudit dispositif d'admission d'air avec le rail d'injection.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 montre une représentation schématique en vue de dessus d'un système de recirculation de gaz d'échappement,
- la figure 2 montre une représentation schématique en vue de coupe d'un système de recirculation de gaz d'échappement,
- la figure 3 montre une représentation schématique en perspective et en coupe de la jonction entre un rail 'injection et un conduit d'admission.

Sur les différentes figures, les éléments identiques portent les mêmes numéros de référence.

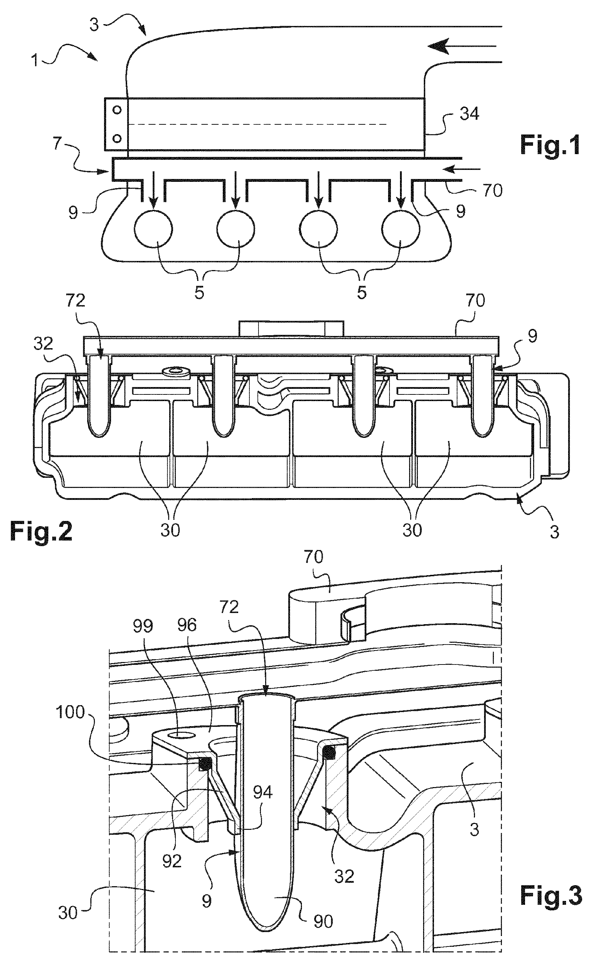

La figure 1 montre une représentation schématique d'un système de recirculation de gaz d'échappement 1. Ce dernier comporte un dispositif d'admission d'air 3 d'un moteur thermique ainsi qu'un circuit de recirculation 7 des gaz d'échappement.

Le dispositif d'admission d'air 3 comprend notamment des conduits d'admission 30 (visibles sur les figures 2 et 3) amenant de l'air aux cylindres de combustion 5. Chaque cylindre de combustion 5 comporte un conduit d'admission 30 propre. Comme montré sur les figures 2 et 3, lesdits conduits d'admission 30 comportent un orifice d'arrivée 32 de gaz d'échappement permettant la connexion avec le circuit de recirculation 7 des gaz d'échappement.

Le moteur thermique peut notamment être un moteur thermique suralimenté. Le dispositif d'admission 3 d'air peut ainsi comporter un refroidisseur d'air de suralimentation 34 comme montré sur la figure 1. La connexion entre les conduits d'admission 30 et le rail de distribution 70 est alors réalisée en aval du refroidisseur d'air de suralimentation 34.

Le circuit de recirculation 7 des gaz d'échappement comprend quant à lui un rail d'injection 70 s'étendant perpendiculairement au sens de circulation de l'air d'admission et positionné au dessus des conduits d'admissions 30. Le rail d'injection 70 comporte des orifices de sortie 72 connectés aux orifices d'arrivée 32 des conduits d'admission 30, par lesquels les gaz d'échappement transitent pour accéder aux conduits d'admissions 30.

La connexion entre les orifices d'arrivée 32 et les orifices de sortie 72 est réalisée par un élément de couplage conique 9 comme illustré sur les figures 2 et 3. Cet élément de couplage conique 9 comporte notamment un tube de connexion 90 connecté à l'orifice de sortie 72 du rail d'injection 70 et plongeant au sein de l'orifice d'arrivée 32 de sorte à guider les gaz d'échappement issus du rail d'injection 70 au sein du conduit d'admission 30. Le tube de connexion 90 a un diamètre inférieur au diamètre de l'orifice d'arrivé 32 afin de s'y insérer sans entrer en contact avec les parois dudit orifice d'arrivé 32.

L'élément de couplage conique 9 comporte en outre un connecteur conique 92 faisant la liaison entre le tube de connexion 9 et l'orifice d'arrivée 32. Le connecteur conique 92 comporte un sommet 94 fixé au tube de connexion 90 de façon étanche et une base 96 fixée, également de façon étanche, à la périphérie de l'orifice d'arrivée 32.

La présence de cet élément de couplage conique 9 permet l'obtention d'un découplage thermique entre d'une part, le rail d'injection 70 et l'élément de couplage conique 9 qui sont traversés et chauffé par les gaz d'échappement pouvant atteindre une température de l'ordre de 450°C, et d'autre part l'interface entre l'élément de couplage conique 9 et la périphérie de l'orifice d'arrivée 32. Ainsi la température à qui peut atteindre l'interface entre l'élément de couplage conique 9 et la périphérie de l'orifice d'arrivée 32 peut être de l'ordre de 175 °C ou inférieur ce qui autorise la fabrication des conduits d'admission et plus généralement du dispositif d'admission d'air 3 en un matériau moins résistant à la chaleur donc moins couteux à produire.

Le dispositif d'admission d'air 3 peut être réalisé en matériau plastique comme par exemple en polyamide renforcé par des fibres de verre tel que le PA66-GF50.

L'élément de couplage conique 9 peut être quant à lui métallique afin de résister aux températures des gaz d'échappement. La fixation entre le connecteur conique 92 et le tube de connexion 90 peut ainsi être réalisée par soudage ou brasage de même que la liaison entre le tube de connexion 90 et le rail d'injection 70 au niveau de l'orifice d'arrivé 72.

Afin d'améliorer l'étanchéité au niveau de l'orifice d'arrivée 32, un joint 100 peut être placé entre la base 96 du connecteur conique 92 et la périphérie de l'orifice d'arrivée 32.

La fixation de l'élément de couplage conique 9 sur le dispositif d'admission 3 peut être réalisée, comme illustrée sur la figure 3, par au moins une vis (non représentée) passant dans un trou 99 traversant la base 96 du connecteur conique 92. Ladite vis se visant dans un orifice tarauder dans le dispositif d'admission 3.

Comme illustré sur les figures 2 et 3, le connecteur conique 92 peut avoir son sommet 94 dirigé vers l'intérieur du conduit d'admission 30. Il est cependant tout à fait possible d'imaginer un mode de réalisation où le sommet 94 du connecteur conique 92 est dirigé vers l'extérieur du conduit d'admission 30.

Ainsi, on voit bien que grâce à la présence de l'élément de couplage conique 9 qui permet la réalisation d'un découplage thermique entre le rail d'injection 70 et le dispositif d'admission 3, il est possible de fabriquer ce dernier dans un matériau moins résistant à la chaleur et moins couteux comme par exemple en matière plastique.

## Revendications

1. Système de recirculation de gaz d'échappement (1) comportant :
- un dispositif d'admission d'air (3) d'un moteur thermique comprenant des conduits d'admission (30) amenant de l'air aux cylindres de combustion (5), chaque cylindre de combustion (5) comportant un conduit d'admission (30) propre, lesdits conduits d'admission (30) comportant un orifice d'arrivée (32) de gaz d'échappement, et
- un circuit de recirculation (7) des gaz d'échappement comprenant un rail d'injection (70) comportant des orifices de sortie (72) des gaz d'échappement connectés aux orifices d'arrivée (32) des conduits d'admission (30),
**caractérisé en ce que** la connexion entre les orifices d'arrivée (32) et les orifices de sortie (72) est réalisée par un élément de couplage conique (9), ledit élément de couplage conique (9) comportant :
- un tube de connexion (90) connecté à l'orifice de sortie (72) du rail d'injection (70) et plongeant au sein de l'orifice d'arrivée (32) de sorte à guider les gaz d'échappement issus du rail d'injection (70) au sein du conduit d'admission (30), ledit tube de connexion (90) ayant un diamètre inférieur au diamètre de l'orifice d'arrivé (32),
- un connecteur conique (92) comportant un sommet (94) fixé au tube de connexion (90) et une base (96) fixée à la périphérie de l'orifice d'arrivée (32).

2. Système de recirculation de gaz d'échappement (1) selon la revendication 1, **caractérisé en ce qu'**entre la base (96) du connecteur conique (92) et la périphérie de l'orifice d'arrivée (32) est placé un joint d'étanchéité (100).

3. Système de recirculation de gaz d'échappement (1) selon l'une des revendications précédentes, **caractérisé en ce que** le sommet (94) du connecteur conique (92) est dirigé vers l'intérieur du conduit d'admission (30).

4. Système de recirculation de gaz d'échappement (1) selon l'une des revendications 1 ou 2, **caractérisé en ce que** le sommet (94) du connecteur conique (92) est dirigé vers l'extérieur du conduit d'admission (30).

5. Système de recirculation de gaz d'échappement (1) selon l'une des revendications précédentes, **caractérisé en ce que** la fixation entre la base (96) du connecteur conique (92) et le dispositif d'admission d'air (3) est réalisée au moyen d'au moins une vis de fixation.

6. Système de recirculation de gaz d'échappement (1) selon l'une des revendications précédentes, **caractérisé en ce que** le rail d'injection (70) et l'élément de couplage conique (9) sont métalliques.

7. Système de recirculation de gaz d'échappement (1) selon l'une des revendications précédentes, **caractérisé en ce que** le dispositif d'admission d'air (3) est en matière plastique.

8. Système de recirculation de gaz d'échappement (1) selon l'une des revendications précédentes, **caractérisé en ce que** le moteur thermique est un moteur suralimenté et que le dispositif d'admission d'air (3) comporte un refroidisseur d'air de suralimentation (34) placé en amont de la connexion dudit dispositif d'admission d'air (3) avec le rail d'injection (70).
